(19) Europäisches Patentamt
European Patent Office
Office européen des brevets

(11) EP 1 668 064 B1

(12) **EUROPEAN PATENT SPECIFICATION**

(45) Date of publication and mention of the grant of the patent:
**12.03.2008 Bulletin 2008/11**

(21) Application number: **04768279.4**

(22) Date of filing: **02.09.2004**

(51) Int Cl.:
***C08G 79/02*** *(2006.01)*

(86) International application number:
**PCT/GB2004/003730**

(87) International publication number:
**WO 2005/023904 (17.03.2005 Gazette 2005/11)**

(54) **NOVEL POLYMERS**

NEUE POLYMERE

NOUVEAUX POLYMERES

(84) Designated Contracting States:
**AT BE BG CH CY CZ DE DK EE ES FI FR GB GR HU IE IT LI LU MC NL PL PT RO SE SI SK TR**

(30) Priority: **02.09.2003 GB 0320496**

(43) Date of publication of application:
**14.06.2006 Bulletin 2006/24**

(73) Proprietor: **Rhodia UK Limited**
**Watford, Hertfordshire WD24 4QP (GB)**

(72) Inventors:
- **DAVIS, Keith**
  **Staffs. DY7 6BP (GB)**
- **WOODWARD, Gary**
  **Northwich cheshire CW9 5QR (GB)**
- **HARDY, Julie**
  **Dudley West Midlands DY1 3LX (GB)**
- **CARMICHAEL, Kim**
  **Whoberley Coventry CV5 8BL (GB)**
- **OTTER, Graham**
  **Catshill Bromsgrove B45 1PB (GB)**

(74) Representative: **Seugnet, Jean Louis et al**
**RHODIA SERVICES**
**Direction de la Propriété Industrielle**
**40, rue de la Haie-Coq**
**93306 Aubervilliers Cedex (FR)**

(56) References cited:
**EP-A- 0 861 846** **WO-A-01/57050**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 668 064 B1

Printed by Jouve, 75001 PARIS (FR)

## Description

This invention relates to novel polymers, to a method of making said polymers and to the use of said polymers.

WO01/57050 discloses a telomeric copolymer comprising a central block of the formula $-PO_2X-[CHRCHR'PO_2X]n-$ and a telomer is formed by adding a monomer to either side of this central block.

Accordingly, the present invention provides a polymer of formula (I)

(I) 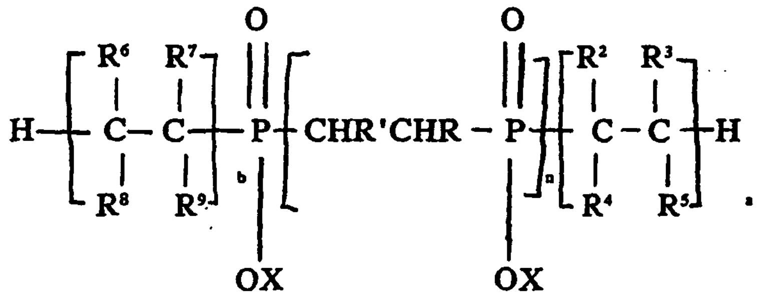

wherein

R and R' are each independently selected from hydrogen, a hydroxyl group, a carboxyl group, an alkyl, aryl or alkaryl group or a hydroxy - or carboxy substituted - alkyl, aryl or alkaryl group, provided that R and R' together have a total of less than 23 carbon atoms and n is greater than 1;
X is hydrogen or a cation or an alkyl group;
one of $R^2$, $R^3$, $R^4$, $R^5$ is a phosphonate group or a sulphonate group and the remainder of $R^2$, $R^3$, $R^4$, $R^5$ are each independently selected from hydrogen, alkyl, aryl, alkaryl, alkoxy, hydroxy, hydroxy or carboxy substituted alkyl, phosphonate or sulphonate groups and a is from 1 to 5; $R^6$, $R^7$, $R^8$, $R^9$ are each independently selected from hydrogen, alkyl, aryl, alkaryl, hydroxy, alkoxy, hydroxy or carboxy substituted alkyl or carboxy groups and b is from 5 to 200.

Further provided is a polymer of formula (V)

(V) 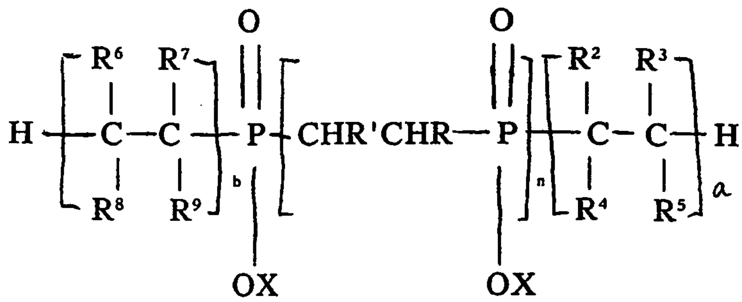

wherein:

R and R' are each independently selected from hydrogen, a hydroxyl group, a carboxyl group, an alkyl, aryl or alkaryl group or a hydroxy - or carboxy substituted - alkyl, aryl or alkaryl group provided that R and R' together have a total of less than 23 carbon atoms and n is greater than 1;
X is hydrogen or a cation or an alkyl group;
$R^2$, $R^3$, $R^4$, $R^5$ are each independently selected from hydrogen, alkyl, aryl, alkaryl, alkoxy, hydroxy, hydroxy or carboxy substituted alkyl, phosphonate or sulphonate groups and a is from 1 to 5;
$R^6$, $R^7$, $R^8$, $R^9$ are each independently selected from hydrogen, alkyl, aryl, alkaryl, hydroxy, alkoxy, hydroxy or carboxy substituted alkyl, sulphonate or carboxy groups and b is from 5 to 200.

The present invention further provides a method of making the polymer of formula (I) or formula (V), the method

comprising reacting;

1) a compound of Formula (II)

(II) 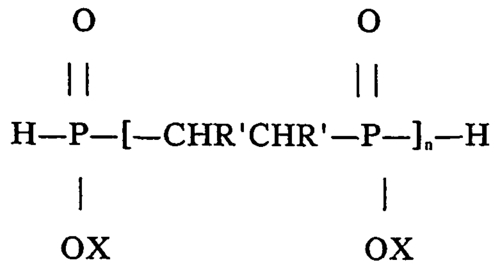

wherein R, R', n and X each have the same significance as in Formula (I) or (V) respectively;
with 2) a monomer of Formula (III)

(III) 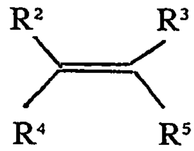

in the presence of an initiator; and subsequently reacting the reaction product of 1) and 2) with a further monomer of Formula (IV):

(IV) 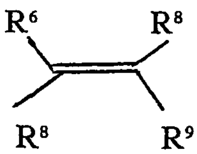

wherein $R^2$, $R^3$, $R^4$, $R^5$, $R^6$, $R^7$, $R^8$ and $R^9$ each have the same significance as in Formula (I) and (V) respectively.

The monomer (III) is preferably selected from the group consisting of vinyl phosphonic acid (VPA), vinylidene-1, 1-diphosphonic acid (VDPA) and vinyl sulphonic acid (VSA).

The initiator is preferably sodium persulphate ($Na_2S_2O_8$). Alternatively, the initiator may be hydrogen peroxide, an azo compound such as azo-bisisobutyronitrile, an organic peroxide or a source of ultraviolet or ionising radiation.

The monomer (IV) is preferably an unsaturated carboxylic acid such as acrylic acid. Alternatively, other monocarboxylic or dicarboxylic unsaturated acids (such as methacrylic acid, fumaric acid, maleic acid, itaconic acid, aconitic acid, mesaconic acid, citraconic acid, crotonic acid, isocrotonic acid, angelic acid, tiglic acid and their water soluble salts) may be used.

The reaction may be carried out at a temperature of between 60°C and 110°C. Preferably, the reaction is carried out at a temperature of about 95°C.

Polymers made according to the present invention may be used for the inhibition of scale in aqueous systems, for example boilers, cooling systems, desalination plants, geothermal waters and oilfield brines.

Polymers made according to the present invention may suitably be used in aqueous-based functional fluids such as hydraulic fluids, lubricants, cutting fluids and oilfield drilling muds.

In particular, polymers of the present invention may be used in the squeeze treatment of oil wells. They are especially effective in inhibiting the formation of barium sulphate scale and/or calcium carbonate scale in oilfields. For example, in oil wells, the hole is typically flushed out with an aqueous surfactant to provide a water-wettable surface and then impregnated with a solution of the inhibitor. Calcium salts are then formed in situ, either by calcium in the formation (where the latter comprises limestone) or by prior, or subsequent, treatment of the hole with an aqueous

solution of a calcium salt, (where the formation comprises sandstone).

Effective concentrations may typically range from 1 to 200 ppm. For instance, 1.5 to 20 ppm, most preferably 2 to 10 ppm, may give useful corrosion protection. However, for oilfield scale prevention where barium sulphate is a problem, concentrations in the range 5 to 200 ppm, especially 8 to 25 ppm, e.g. 10 to 20 ppm, are preferred.

Polymers according to the present invention may be used in combination with one another, and/or in conjunction with other water treatment agents including: surfactants, such as anionic surfactants (e.g. $C_{10-20}$ alkyl benzene sulphonates, $C_{10-20}$ olefin sulphonates, $C_{10-20}$ alkyl sulphates, $C_{10-20}$ alkyl 1 to 25 mole ether sulphates, $C_{10-20}$ paraffin sulphonates, $C_{10-20}$ soaps, $C_{10-20}$ alkyl phenol sulphates, sulphosuccinates, sulphosuccinamates, lignin sulphonates, fatty ester sulphonates, $C_{10-20}$ alkyl phenol ether sulphates, $C_{10-20}$ alkyl ethanolamide sulphates, $C_{10-20}$ alpha sulphofatty acid salts, $C_{10-20}$ acyl sarcosinates, isethionates, $C_{10-20}$ acyl taurides, $C_{10-20}$ alkyl hydrogen phosphates), non-ionic surfactants (e.g. ethoxylated natural or synthetic $C_{8-25}$ alcohols, ethoxylated fatty acids, ethoxy/propyleneoxy block copolymers, ethoxylated fatty amines, mono- and dialkanolamides, amine oxides and $C_{10-20}$ acyl sorbitan and/or glyceryl ethoxylates) amphoteric surfactants (e.g. betaines, sulphobetaines, and/or quaternised imidazoline), and/or cationic surfactants (e.g. benzalkonium salts, $C_{10-20}$ alkyl trimethyl ammonium salts, and/or $C_{10-20}$ alkyl trimethyl or tris (hydroxymethyl) phosphonium salts); sequestrants, chelating agents, corrosion inhibitors and/or other threshold agents (e.g. sodium tripolyphosphate, sodium ethylenediamine tetraacetate, sodium nitrilo triacetate, tetra potassium pyrophosphate, acetodiphosphonic acid and its salts, ammonium trismethylene phosphonic acid and its salts, ethylenediamine tetrakis (methylene phosphonic) acid and its salts, diethylenetriamine pentakis (methylene phosphonic) acid, hexamethylenediamine tetrakis (methylene phosphonic) acid, bishexamethylenetriamine pentakis (methylene phosphonic) acid and ethanolamine bis(methylenephosphonic) acid and its salts); tolyltriazole and mixtures of nitrate, benzoate, HHP and/or PTCB) biocides (e.g. tetrakis (hydroxymethyl) phosphonium salts, formaldehyde, glutaraldehyde); oxidising biocides and/or bleaches (e.g. chlorine, chlorine dioxide, hydrogen peroxide, sodium perborate); foam controlling agents such as silicone antifoams, acetylenic diols; oxygen scavengers such as hydrazines and/or hydroxylamines; pH controlling and/or buffering agents such as amines, borates, citrates and/or acetates; chromium salts; zinc salts; and/or other water treatment agents such as polymeric dispersants and coagulants including polymaleic, polyacrylic and polyvinylsulphonic acids and their salts, starches and/or carboxy methyl cellulose and/or molybdates. The invention provides formulations comprising an effective amount of a product of the invention as aforesaid and any of the aforesaid known water treatment agents. Such formulations may, for example, contain from 5 to 95% by weight of a product according to the present invention and from 5 to 90% by weight of one or more of any of the aforesaid water treatment agents.

According to a further embodiment, the present invention provides a corrosion-inhibiting pigment which is a solid composition prepared by reacting a concentrated aqueous solution of a water-soluble polymer or telomer according to the invention with a base or a salt of calcium, zinc, barium, aluminium or other polyvalent metal and precipitating a solid salt.

According to a still further embodiment, our invention provides a corrosion-inhibiting coating composition containing a pigment as described in the immediately-preceding paragraph.

The corrosion-inhibiting pigment may be dissolved or dispersed in a paint, varnish, enamel, lacquer, or other coating formulation to form the corrosion-inhibiting coating composition. The formulation may further comprise a liquid vehicle such as water, or a volatile organic solvent including petroleum spirit, turpentine, ketones, esters and/or aromatic hydrocarbon solvent, and/or a drying oil, such as linseed oil, soya oil, tung oil or dehydrogenated castor oil, which can be dissolved in said volatile organic solvent or emulsified in said water.

The formulation may typically also comprise a resin, e.g. a polyester, urea formaldehyde, melamine, acrylic, alkyd, polyurethane, vinyl chloride, vinyl acetate, phenolic or epoxy resin, dissolved or dispersed therein, and/or a dispersed pigment. We prefer that the pigment should be or should comprise other corrosion-inhibiting pigments such as red lead, potassium zinc chromate, metallic zinc or aluminium powder or zinc oxide and/or that the formulation should contain one or more of the other corrosion inhibitors referred to hereinabove, in addition to the corrosion-inhibiting pigment of the invention.

The coating compositions may additionally contain any of the conventional paint ingredients, including pigments such as titanium oxide, iron oxide, carbon black, phthalocyanine pigments or aluminium stearate, chlorinated rubber, polystyrene, silicone, asphalt, wetting agents, dispersants, emulsifiers, biocides, flocculants, marine antifoulants, antifoams, viscosifiers, fire retardants, fluorescers, aerosol propellants, talc, clay and/or plasticisers.

Alternatively, the water soluble corrosion-inhibiting pigments of the invention may be used to provide a corrosion-inhibiting treatment for metal surfaces such as steel, aluminium and aluminium alloys after machining and prior to storage, coating, electroplating, polishing or etching. Typically the work is coated with an aqueous solution containing at least an operative amount of said corrosion-inhibiting pigment, e.g., 10 to 500 ppm, preferably 25 to 300 ppm, such as 20 to 200 ppm, especially 25 to 100 ppm, more especially 30 to 80 ppm.

After contacting with the corrosion-inhibiting solution, the work may be rinsed and/or subjected to one or more coating or finishing operations such as resin coating, lacquering, enamelling, painting, electrophoretic coating, spattering, vapour deposition, electrodeposition, etching, chemical or electrical polishing or may be put aside for storage.

The work may be greased for storage, but an advantage of treatment with a corrosion-inhibiting pigment of the present invention is that greasing and hence subsequent degreasing can be avoided.

The polymer of the present invention may be incorporated into solid or liquid detergent compositions. It functions as a stain remover and also may help to stabilise any bleach present. It exhibits valuable detergent-building action by sequestering calcium. Typically it is added to detergent compositions in amounts of from 0.5 to 20% by weight of the composition.

The liquid detergent composition preferably contains 5 to 50%, e.g. 10 to 40% by weight surfactant, 5 to 60%, e.g. 10 to 40% builder, 20 to 75%, e.g. 50 to 70% by weight water and 0.1 to 25% by weight of said polymer. The liquid detergent composition preferably also contains conventional amounts of minor adjuncts including enzymes, soil suspenders such as sodium carboxymethyl cellulose, optical brighteners, dyes, perfumes, preservatives and foam modifiers.

The builder preferably comprises non-phosphate builders such as zeolite, carbonate, citrate, nitrilotriacetate and ethylene diamine tetracetate.

The solid detergent composition may contain from 1 to 90% by weight of surfactant, more usually 2 to 70%, e.g. 3 to 60% especially 4 to 50%, preferably 5 to 40%, more preferably 6 to 30%, most preferably 7 to 20% by weight of surfactant.

For example the surfactant may be, or may comprise, one or more anionic surfactants such as an alkyl benzene sulphate, alkyl sulphate, alkyl ether sulphate, paraffin sulphonate, olefin sulphonate, alkyl ether sulphonate, alkylphenyl sulphate, alkylphenyl ether sulphate, alkyl sulphosuccinate, alkyl sulphosuccinamate, alkyl isethionate, alkyl sarcosinate, soap, alkyl ether carboxylate, alkyl ether polycarboxylate, alkyl tauride, alkyl phosphate, alkyl ether phosphate or alkyl- or thiol-capped polyelectrolytes such as an alkylthiol-capped polymaleic acid.

All references to "alkyl" groups in the immediately-preceding paragraph refer to $C_{8-22}$ straight or branched chain alkyl or alkenyl groups. "Ether" refers to glyceryl, to mono- or poly-ethylenoxy, or to mono- or poly-propyleneoxy. The cation of the aforesaid anionic surfactants is usually sodium, but may be potassium or mono-, di- or tri-alkylolamine. Less commonly, the cation may be lithium, ammonium, calcium, magnesium, zinc or a mono-, di- or tri-alkyl amine such as isopropylamine or trimethylamine.

The surfactant may also be, or may comprise, one or more non-ionic surfactants such as the polyalkoxylated derivatives of alcohols, carboxylic acids, alkyl phenols, alkylamines, alkanolamides, or glycerol or sorbitan ester, wherein each compound has an "alkyl" group as hereinabove defined, and the polyalkyleneoxy group comprises from 1 to 50, e.g. 2 to 10, ethyleneoxy groups.

The present invention will be illustrated by way of the following examples.

**Reference example 1**

A phosphorus-based oligomer was prepared as described in EP 1254144. This oligomer is believed to have the structure of formula (II).

**Reference example 2**

VPA (0.109 moles) was added to 28.8g of the product from Example 1 in a round-bottomed flask, fitted with a temperature probe and a reflux condenser. The mixture was heated to 85°C. Sodium persulphate (0.0054 moles) was added in water (5 mls) over 45 minutes, followed by a 30-minute age, to produce a viscous liquid, characterised by $^{31}P$ NMR.

**Example 3**

The viscous liquid of example 2 (0.0112 moles) was adjusted to pH 4.5 with sodium hydroxide (48% w/w, 0.08 moles), diluted with water (30 g), and placed in a round-bottomed flask fitted with a reflux condenser and a temperature probe. The solution was heated to 60-110°C (preferably 85°C). Acrylic acid (0.224 moles) was adjusted to pH 4.5 with sodium hydroxide (48% w/w, 0.157 moles) and then diluted with water (114 g). This solution and sodium persulphate (0.0112 moles) in water (18g) were added concurrently using peristaltic pumps over 4 hours, followed by a 30-minute age.

The product was analysed by isocratic GPC system with RI detection. Calculation of molecular weights employs a narrow standard calibration using poly(acrylic acid) calibrants of defined peak and weight averages $M_p$ and $M_w$ respectively). A molecular weight of 3823 g/mol was determined.

**Test conditions**

Test temperature 121°C, 5 Bar (500 kPa)

Test Medium - A synthetic formation water (produced water) corresponding to a 50:50 mix of Formation Water : Sea Water having the following compositions:

| ION | IONIC COMPOSITION (mg/l) | | |
|---|---|---|---|
| | Formation water | Sea Water | Produced Water |
| $Na^+$ | 24100 | 10890 | 17495 |
| $K^+$ | 1180 | 460 | 820 |
| $Ca^{2+}$ | 520 | 428 | 474 |
| $Mg^{2+}$ | 73 | 1368 | 720 |
| $Ba^{2+}$ | 650 | 0 | 325 |
| $Sr^{2+}$ | 55 | 7 | 31 |
| Cl | 40400 | 19766 | 30083 |
| $SO_4^{2-}$ | 10 | 2960 | 1485 |
| $HCO_3^-$ | 0 | 140 | 70 |

Test pH - The pH value of both waters is buffered to pH 4.90 $\pm$ 0.05 @25°C by the inclusion of 0.01M. acetic acid/sodium acetate buffer.

Inhibitor Concentration - The run starts with an initial inhibitor level of 160 mg/l (active acid) in the combined flow and decreases the concentration in 20 mg/l steps, with a complete tube cleaning and washing cycle being performed between each decrement.

Cycle Time - Each level of inhibitor is evaluated for 30 minutes before proceeding to the next, i.e. lower, level. The pressure drop across the narrow bore coil is continuously monitored and logged by a personal computer running Advantech 'Genie' data acquisition and control software.

Fail Criterion & M.I.C. - In the absence of inhibitor and under these conditions, the tube becomes rapidly blocked with scale. In practice, to prevent complete and irrecoverable blockage of the tube, the brine flows are terminated and tube cleaning commences when the pressure drop reaches 1 psia (6.89 kPa). When evaluating inhibitors, if the pressure drop exceeds 1 psia (6.89 kPa) within the 30 minutes cycle time, then the inhibitor is deemed to have failed at that level. The minimum inhibitory concentration, M.I.C., therefore obviously lies somewhere between the "fail level" and the previous concentration at which the tube remained essentially clear for 30 minutes.

**Results**

The polymer in accordance with the present invention was found to be superior in a scale inhibition test to the other products, as shown in Table 1 below.

**Table 1 Scale inhibition test:**

| Sample | Reaction | Tube block test/ ppm failure | Mw (g/mol) |
|---|---|---|---|
| Example 3 | P Block polymer, Acrylate and VPA | 100, 100 | 3823 |
| (i) Commercial Polymer 1 | Standard sample | 100, 120, 120 | 3780 |
| (ii) Commercial Polymer 2 | Standard sample | 100, 120, 120 | 5500 |
| (i) a phosphonate end-capped poly(acrylic) acid.<br>(ii) a phosphonate end-capped copolymer of vinylsulphonic acid and acrylic acid. | | | |

**Adsorption onto Sandstone**

**Test conditions**

10g of acid-washed crushed Clashach sandstone, with a particle size of 150-710 microns, was mixed with 20 ml of 500 mg/l polymer solution at the desired pH, placed in a tightly sealed bottle and heated in an oven at 95°C for 20 hours. After this time the solution was filtered through a 0.45 micron membrane filter and analysed for polymer content by turbidimetric determination with 'Hyamine 1622'. The initial polymer concentration was also determined and the amount of polymer lost by adsorption onto the sand calculated using the formula:

$$\text{Adsorption (mg/g)} = \frac{(C_{initial} - C_{final}) \text{ x } V_{soln}}{M_{sand} \qquad 1000}$$

**Results**

The polymer according to the present invention was found to have superior adsorption properties when compared to other products.

This is illustrated in the accompanying Graph.

**Claims**

1. A polymer of formula (I)

(I) 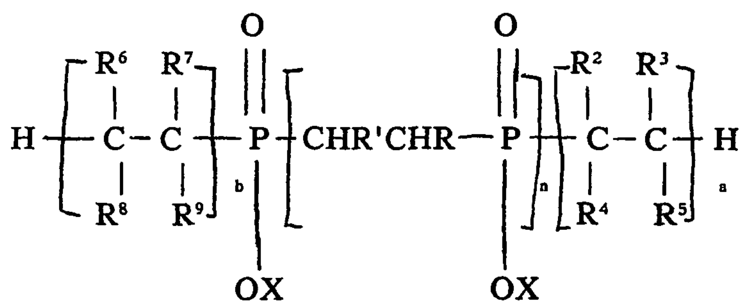

wherein:

R and R' are each independently selected from hydrogen, a hydroxyl group, a carboxyl group, an alkyl, aryl or alkaryl group or a hydroxy - or carboxy substituted - alkyl, aryl or alkaryl group provided that R and R' together have a total of less than 23 carbon atoms and n is greater than 1;
X is hydrogen or a cation or an alkyl group;
one of $R^2$, $R^3$, $R^4$, $R^5$ is a phosphonate or a sulphonate group and the remainder of $R^2$, $R^3$, $R^4$, $R^5$ are each independently selected from hydrogen, alkyl, aryl, alkaryl, alkoxy, hydroxy, hydroxy or carboxy substituted alkyl, phosphonate or sulphonate groups and a is from 1 to 5;
$R^6$, $R^7$, $R^8$, $R^9$ are each independently selected from hydrogen, alkyl, aryl, alkaryl, hydroxy, alkoxy, hydroxy or carboxy substituted alkyl or carboxy groups and b is from 5 to 200.

2. A method of making the polymer of Claim 1, the method comprising reacting;

1) a compound of Formula (II):

(II) 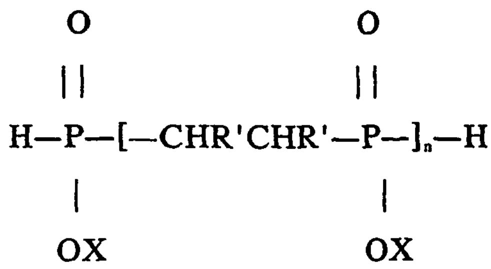

wherein R, R', n and X each have the same significance as in Formula (I); with 2) a monomer of Formula (III)

(III) 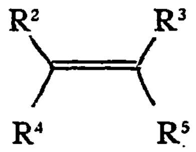

in the presence of an initiator; and subsequently reacting the reaction product of 1) and 2) with a further monomer of Formula (IV):

(IV) 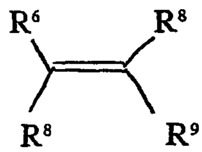

wherein $R^2$, $R^3$, $R^4$, $R^5$, $R^6$, $R^7$, $R^8$ and $R^9$ each have the same significance as in Formula (I).

**3.** A method as claimed in Claim 2 in which the monomer (III) is selected from the group consisting of vinyl phosphonic acid (VPA), vinylidene-1, 1-diphosphonic acid (VDPA) and vinyl sulphonic acid (VSA).

**4.** A method as claimed in Claim 2 or Claim 3 in which the initiator is sodium persulphate ($Na_2S_2O_8$).

**5.** A method as claimed in Claim 2 or Claim 3 in which the initiator is hydrogen peroxide, an azo compound, an organic peroxide or a source of ultraviolet or ionising radiation.

**6.** A method as claimed in any one of Claims 2 to 5 in which the monomer (IV) is an unsaturated carboxylic acid.

**7.** A method as claimed in Claim 6 in which the monomer (IV) is acrylic acid.

**8.** A method as claimed in Claim 6 in which the monomer (IV) is an unsaturated carboxylic acid selected from the group consisting of methacrylic acid, fumaric acid, maleic acid, itaconic acid, aconitic acid, mesaconic acid, citraconic acid, crotonic acid, isocrotonic acid, angelic acid, tiglic acid and their water soluble salts.

**9.** A method as claimed in any one of Claims 2 to 8 in which the reaction is carried out at a temperature of between 60°C to 110°C.

**10.** A method as claimed in Claim 9 in which the reaction is carried out at a temperature of 95°C.

**11.** The use of the polymer of Claim 1 for the inhibition of scale in an aqueous system.

**12.** Use according to Claim 11, in which the aqueous system is or comprises a boiler, a cooling system, a desalination plant, a geothermal water or an oilfield brine.

**13.** The use of the polymer of Claim 1 in an aqueous based functional fluid selected from the group consisting of hydraulic fluids, lubricants, cutting fluids and oilfield drilling muds.

**14.** The use of the polymer of Claim 1 in the squeeze treatment of oil wells.

**15.** The use of the polymer of Claim 1 in inhibiting the formation of barium sulphate scale and/or calcium sulphate scale in oilfields.

**16.** The use of the polymer as claimed in Claim 1 in conjunction with one or more other water treatment agents selected from the group consisting of surfactants; sequestrants; chelating agents; corrosion inhibitors; oxidising biocides; bleaches; foam controlling agents; buffers and dispersants.

**17.** A corrosion-inhibiting pigment comprising a solid which has been prepared by reacting a concentrated aqueous solution of a water-soluble polymer according to Claim 1 with a base or salt of calcium, zinc, barium, aluminium or other polyvalent metal and precipitating a solid salt.

**18.** A corrosion-inhibiting formulation comprising a pigment as claimed in Claim 17 which is dissolved or dispersed in an anti-corrosive paint, varnish, enamel, lacquer, or other coating formulation.

**19.** A corrosion-inhibiting formulation as claimed in Claim 18 in which the formulation further comprises a liquid vehicle.

**20.** A corrosion-inhibiting formulation as claimed in Claim 19 in which the liquid vehicle is water.

**21.** A corrosion-inhibiting formulation as claimed in Claim 18 in which the formulation further comprises a volatile organic solvent selected from petroleum spirit, turpentine, ketones and esters and/or an aromatic hydrocarbon solvent, and/or a drying oil selected from linseed oil, soya oil, tung oil, and dehydrogenated castor oil.

**22.** A corrosion-inhibiting formulation as claimed in any one of Claims 18 to 21 in which the formulation further comprises a resin selected from polyester, urea, polyurethane, vinyl chloride, vinyl acetate, phenolic and epoxy resins and/or a dispersed pigment.

**23.** A corrosion-inhibiting coating composition containing a pigment according to Claim 17.

**24.** The use of a corrosion-inhibiting formulation as claimed in any one of Claims 18 to 22 in the treatment of metal surfaces after machining and prior to storage, coating, electroplating polishing or etching.

## Patentansprüche

**1.** Polymeres der Formel (I)

(I)

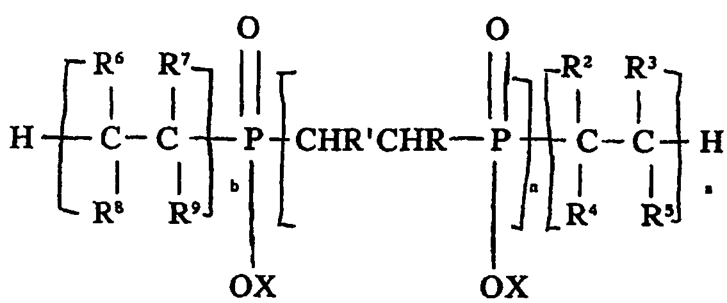

worin R und R' unabhängig ausgewählt sind unter Wasserstoff, einer Hydroxygruppe, einer Carboxygruppe, einer

Alkyl-, Aryl- oder Alkarylgruppe, oder einer Hydroxy- oder Carboxy-substituierten Alkyl -, Aryl- oder Alkarylgruppe, mit der Maßgabe, dass R und R' zusammen eine Gesamtzahl von weniger als 23 Kohlenstoffatomen aufweisen und n größer als 1 ist;
X ist Wasserstoff oder ein Kation oder eine Alkylgruppe;
einer der Reste $R^2$, $R^3$, $R^4$, $R^5$ ist eine Phosphonat- oder Sulfonatgruppe, und die restlichen von $R^2$, $R^3$, $R^4$, $R^5$ sind jeweils unabhängig ausgewählt unter Wasserstoff, Alkyl, Aryl, Alkaryl, Alkoxy, Hydroxy, Hydroxy- oder Carboxysubstituiertem Alkyl, Phosphonat- oder Sulfonatgruppen, und a ist eine Zahl von 1 bis 5;
$R^6$, $R^7$, $R^8$, $R^9$ sind jeweils unabhängig ausgewählt unter Wasserstoff, Alkyl, Aryl, Alkaryl, Hydroxyl, Alkoxy, Hydroxy- oder Carboxy-substituierten Alkyl- oder Carboxygruppen, und b ist eine Zahl von 5 bis 200.

2. Verfahren zur Herstellung des Polymeren nach Anspuch 1, wobei das Verfahren die Reaktion umfasst von:

1) einer Verbindung der Formel (II)

(II)

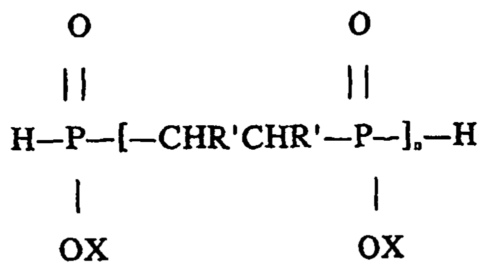

worin R, R', n und X die gleiche Bedeutung haben wie in der Formel (I);
mit 2) einem Monomeren der Formel (III)

(III)

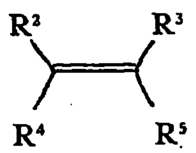

in Gegenwart eines Initiators; und nachfolgend die Umsetzung des Reaktionsproduktes von 1) und 2) mit einem weiteren Monomeren der Formel (IV)

(IV)

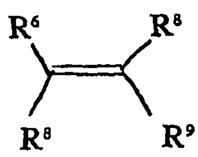

worin $R^2$, $R^3$, $R^4$, $R^5$, $R^6$, $R^7$, $R^8$ und $R^9$ die gleiche Bedeutung haben wie in der Formel (I).

3. Verfahren nach Anspruch 2, worin das Monomere (III) aus der Gruppe ausgewählt ist, bestehend aus Vinylphosphonsäure (VPA), Vinyliden-1, 1-Diphosphonsäure (VDPA) und Vinylsulfonsäure (VSA).

4. Verfahren nach Anspruch 2 oder Anspruch 3, worin der Initiator Natriumpersulfat ($Na_2S_2O_8$) ist.

5. Verfahren nach Anspruch 2 oder Anspruch 3, worin der Initiator Wasserstoffperoxid, eine Azoverbindung, ein organisches Peroxid oder eine Quelle von ultravioletter oder ionisierender Strahlung ist.

6. Verfahren nach einem der Ansprüche 2 bis 5, worin das Monomere (IV) eine ungesättigte Carbonsäure ist.

7. Verfahren nach Anspruch 6, worin das Monomere (IV) Acrylsäure ist.

8. Verfahren nach Anspruch 6, worin das Monomere (IV) eine ungesättigte Carbonsäure ist, ausgewählt aus der Gruppe, bestehend aus Methacrylsäure, Fumarsäure, Maleinsäure, Itaconsäure, Aconitsäure, Mesaconsäure, itraconsäure, Crotonsäure, Isocrotonsäure, Angelicasäure, Tiglinsäure und deren wasserlösliche Salze.

9. Verfahren nach einem der Ansprüche 2 bis 8, worin die Reaktion bei einer Temperatur von 60 bis 110 °C durchgeführt wird.

10. Verfahren nach Anspruch 9, worin die Reaktion bei einer Temperatur von 95 °C durchgeführt wird.

11. Verwendung des Polymeren von Anspruch 1 zur Inhibierung von Ablagerungen in einem wässrigen System.

12. Verwendung gemäß Anspruch 11, worin das wässrige System ein Boiler, ein Kühlsystem, eine Entsalzungsanlage, ein geothermisches Wasser oder eine Erdölfeld-Salzlösung ist oder umfasst.

13. Verwendung des Polymeren von Anspruch 1 in einem funktionellen Fluid auf wässriger Basis, ausgewählt aus der Gruppe, bestehend aus hydraulischen Flüssigkeiten, Gleitmitteln, Schneidmedien und Erdölfeld-Bohrspülschlämmen.

14. Verwendung des Polymeren von Anspruch 1 bei der Auspreßbehandlung von Erdöl-Bohrlöchern.

15. Verwendung des Polymeren von Anspruch 1 bei der Inhibierung der Bildung von Bariumsulfat-Ablagerungen und /oder Calciumsulfat-Ablagerungen in Erdölfeldern.

16. Verwendung des Polymeren von Anspruch 1 in Verbindung mit einem oder mehreren Mitteln zur Wasserbehandlung, ausgewählt aus der Gruppe, bestehend aus oberflächenaktiven Mitteln; Sequestriermitteln; Chelatisiermitteln; Korrosionsinhibitoren; oxidierenden Bioziden; Bleichmitteln; Schaumsteuerungsmitteln; Pufferlösungen und Dispergiermiteln.

17. Korrosions-inhibierendes Pigment, umfassend einen Feststoff, der hergestellt ist durch Reaktion einer konzentrierten wäßrigen Lösung eines wasserlöslichen Polymeren gemäß Anspruch 1 mit einer Base oder einem Salz von Calcium, Zink, Barium, Aluminium oder einem anderen mehrwertigen Metall und Ausfällung eines festen Salzes.

18. Korrosions-inhibierende Formulierung, umfassend ein Pigment, wie in Anspruch 17 beansprucht, das gelöst oder dispergiert ist in einer anti-korrosiven Farbe, Isolierlack, Emaillelack, Pigmentlack oder anderen Überzugsformulierungen.

19. Korrosions-inhibierende Formulierung nach Anspruch 18, worin die Formulierung weiterhin einen flüssigen Träger umfasst.

20. Korrosions-inhibierende Formulierung nach Anspruch 19, worin der flüssige Träger Wasser ist.

21. Korrosions-inhibierende Formulierung nach Anspruch 18, worin die Formulierung weiterhin umfasst ein flüchtiges organisches Lösungsmittel, ausgewählt unter Lösungsbenzin, Terpentinen-, Ketonen und Estern, und/oder ein aromatisches Kohlenwasserstoff-Lösungsmittel und/oder ein trocknendes Öl, ausgewählt unter Leinöl, Sojaöl, China-Holzöl und dehydriertem Rizinusöl.

22. Korrosions-inhibierende Formulierung nach einem der Ansprüche 18 bis 21, worin die Formulierung weiterhin umfasst ein Harz, ausgewählt unter Polyester-, Harnstoff-, Polyurethan-, Vinylchlorid-, Vinylacetat-, Phenol- und Epoxyharzen, und /oder ein dispergiertes Pigment.

23. Korrosions-inhibierende Beschichtungszusammensetzung, enthaltend ein Pigment gemäß Anspruch 17.

24. Verwendung einer korrosions-inhibierenden Formulierung, wie in einem der Ansprüche 18 bis 22 beansprucht, bei der Behandlung von Metalloberflächen nach der maschinellen Bearbeitung und vor der Lagerung, Beschichtung, dem galvanisierenden Polieren oder Ätzen.

## Revendications

**1.** Polymère de formule (I)

(I) 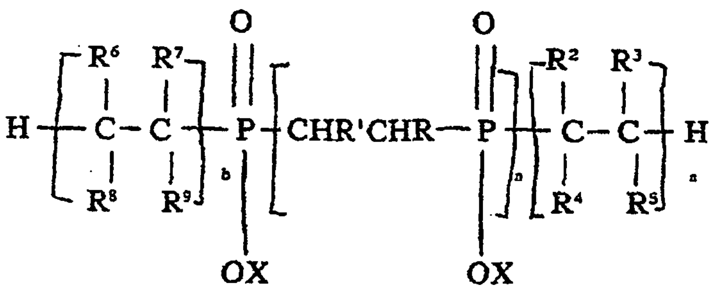

dans laquelle :

R et R' sont choisis chacun indépendamment parmi un atome d'hydrogène, un groupe hydroxyle, un groupe carboxyle, un groupe alkyle, un groupe aryle ou un groupe alcaryle, ou un groupe alkyle, un groupe aryle ou un groupe alcaryle hydroxy- ou carboxy-substitué, à condition que R et R' renferment conjointement un total de moins de 23 atomes de carbone, et n est supérieur à 1 ;
X est un atome d'hydrogène ou un cation ou un groupe alkyle ;
l'un parmi $R^2$, $R^3$, $R^4$, $R^5$ est un groupe phosphonate ou un groupe sulfonate et les autres parmi $R^2$, $R^3$, $R^4$, $R^5$ sont choisis chacun indépendamment parmi un atome d'hydrogène, un groupe alkyle, un groupe aryle, un groupe alcaryle, un groupe alcoxy, un groupe hydroxy, un groupe alkyle hydroxy- ou carboxy-substitué, un groupe phosphonate ou un groupe sulfonate et a vaut de 1 à 5 ;
$R^6$, $R^7$, $R^8$, $R^9$ sont choisis chacun indépendamment parmi un atome d'hydrogène, un groupe alkyle, un groupe aryle, un groupe alcaryle, un groupe hydroxy, un groupe alcoxy, un groupe alkyle hydroxy- ou carboxy-substitué ou un groupe carboxy, et b vaut de 5 à 200.

**2.** Procédé de production du polymère selon la revendication 1, le procédé comprenant la réaction de

1) un composé de formule (II) :

(II) 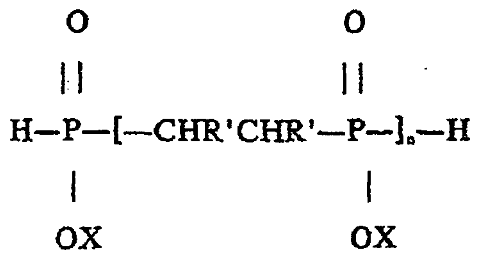

dans laquelle R, R', n et X présentent chacun la même signification que dans la formule (I) ;
avec 2) un monomère de formule (III)

(III) 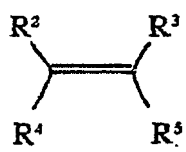

en présence d'un amorceur ; et ensuite la réaction du produit de réaction de 1) et 2) avec un monomère supplé-

mentaire de formule (IV):

(IV) 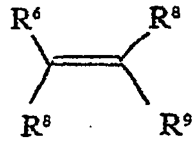

dans laquelle $R^2$, $R^3$, $R^4$, $R^5$, $R^6$, $R^7$, $R^8$ et $R^9$ présentent chacun la même signification que dans la formule (I).

**3.** Procédé selon la revendication 2, dans lequel le monomère (III) est choisi parmi le groupe constitué de l'acide vinylphosphonique (VPA), de l'acide vinylidène-1,1-diphosphonique (VDPA) et de l'acide vinylsulfonique (VSA).

**4.** Procédé selon la revendication 2 ou la revendication 3, dans lequel l'amorceur est le persulfate de sodium ($Na_2S_2O_8$).

**5.** Procédé selon la revendication 2 ou la revendication 3, dans lequel l'amorceur est le peroxyde d'hydrogène, un composé azoïque, un peroxyde organique ou une source de rayonnement ultraviolet ou ionisant.

**6.** Procédé selon l'une quelconque des revendications 2 à 5, dans lequel le monomère (IV) est un acide carboxylique insaturé.

**7.** Procédé selon la revendication 6, dans lequel le monomère (IV) est l'acide acrylique.

**8.** Procédé selon la revendication 6, dans lequel le monomère (IV) est un acide carboxylique insaturé choisi parmi le groupe constitué de l'acide méthacrylique, de l'acide fumarique, de l'acide maléique, de l'acide itaconique, de l'acide aconitique, de l'acide mésaconique, de l'acide citraconique, de l'acide crotonique, de l'acide isocrotonique, de l'acide angélique, de l'acide tiglique et de leurs sels hydrosolubles.

**9.** Procédé selon l'une quelconque des revendications 2 à 8, dans lequel la réaction est effectuée à une température comprise entre 60°C et 110°C.

**10.** Procédé selon la revendication 9, dans lequel la réaction est effectuée à une température de 95°C.

**11.** Utilisation du polymère selon la revendication 1 pour l'inhibition du tartre dans un système aqueux.

**12.** Utilisation selon la revendication 11, dans laquelle le système aqueux est ou comprend un bouilleur, un système de refroidissement, une installation de dessalement, une eau géothermique ou une saumure de champ pétrolifère.

**13.** Utilisation du polymère selon la revendication 1 dans un fluide fonctionnel à base aqueuse choisi parmi le groupe constitué de fluides hydrauliques, de lubrifiants, de fluides de coupe et de boues de forage de champs pétrolifères.

**14.** Utilisation du polymère selon la revendication 1 dans le traitement d'esquiche de puits de pétrole.

**15.** Utilisation du polymère selon la revendication 1 pour l'inhibition de la formation de tartre de sulfate de baryum et/ou de tartre de sulfate de calcium dans des champs pétrolifères.

**16.** Utilisation du polymère selon la revendication 1 conjointement avec un ou plusieurs autres agents de traitement de l'eau choisis parmi le groupe constitué d'agents tensioactifs ; d'agents séquestrants ; d'agents chélateurs ; d'inhibiteurs de corrosion ; de biocides oxydants ; d'agents de blanchiment ; d'agents de régulation du moussage ; de tampons et d'agents dispersants.

**17.** Pigment inhibant la corrosion, comprenant un solide qui a été préparé par la réaction d'une solution aqueuse concentrée dans le polymère hydrosoluble selon la revendication 1 avec une base ou un sel de calcium, de zinc, de baryum, d'aluminium ou d'un autre métal polyvalent, et par la précipitation d'un sel solide.

**18.** Formulation inhibant la corrosion, comprenant un pigment selon la revendication 17 qui est dissous ou dispersé dans une peinture, un vernis, une peinture laquée, une laque ou une autre formulation de revêtement anti-corrosive.

**19.** Formulation inhibant la corrosion selon la revendication 18, la formulation comprenant en outre un véhicule liquide.

**20.** Formulation inhibant la corrosion selon la revendication 19, dans laquelle le véhicule liquide est l'eau.

**21.** Formulation inhibant la corrosion selon la revendication 18, la formulation comprenant en outre un solvant organique volatile choisi parmi l'essence minérale, la térébenthine, des cétones et des esters et/ou un solvant hydrocarboné aromatique, et/ou une huile de séchage choisie parmi l'huile de lin, l'huile de soja, l'huile de bois de Chine et l'huile de bois de ricin déshydrogénée.

**22.** Formulation inhibant la corrosion selon l'une quelconque des revendications 18 à 21, la formulation comprenant en outre une résine choisie parmi un polyester, de l'urée, un polyuréthane, du chlorure de vinyle, de l'acétate de vinyle, des résines phénoliques et époxy et/ou un pigment dispersé.

**23.** Composition de revêtement inhibant la corrosion, contenant un pigment selon la revendication 17.

**24.** Utilisation d'une formulation inhibant la corrosion selon l'une quelconque des revendications 18 à 22 pour le traitement de surfaces métalliques après l'usinage et avant le stockage, le revêtement, le polissage par galvanoplastie ou l'attaque chimique.

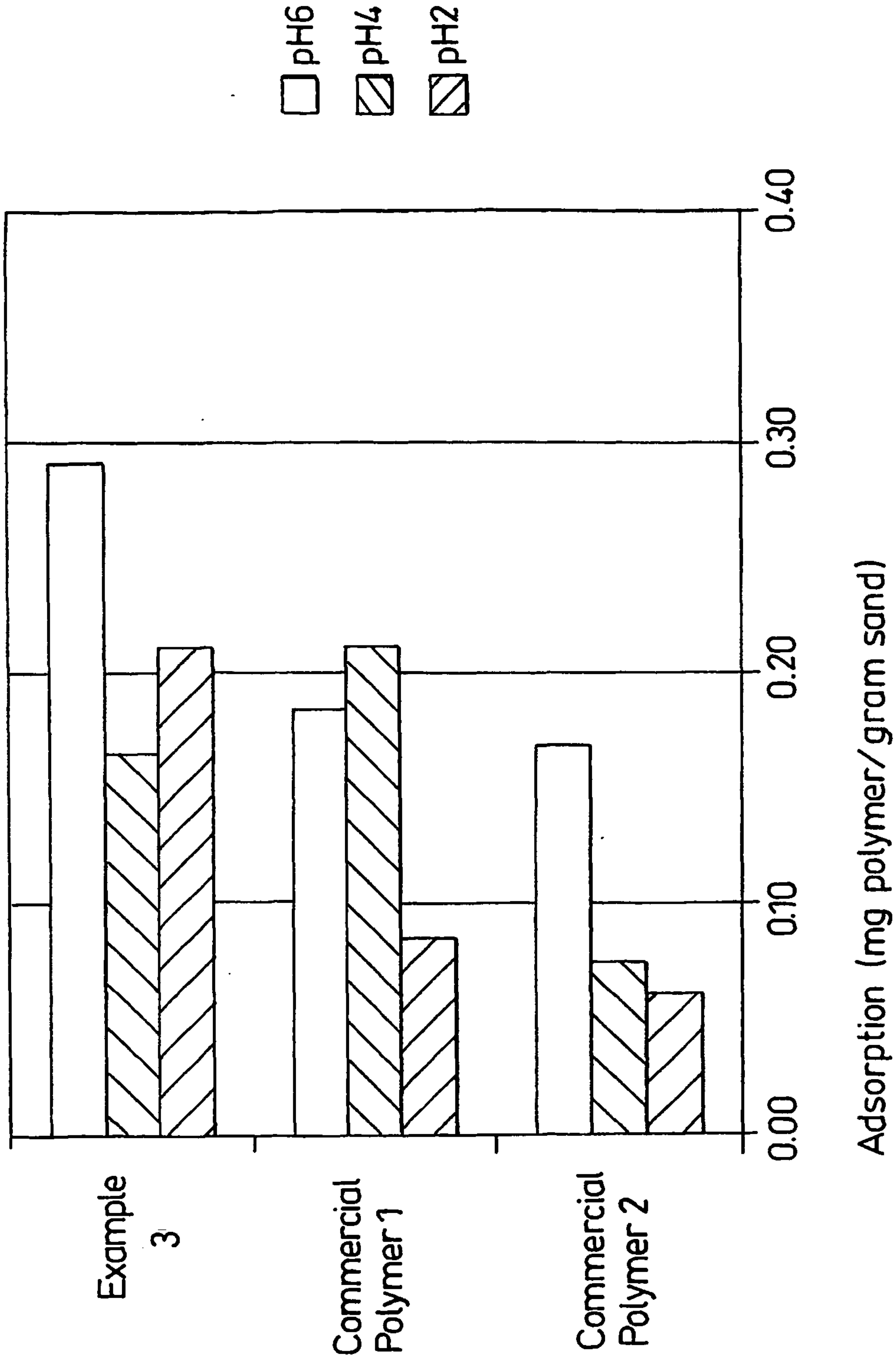
pH6
pH4
pH2
Example 3
Commercial Polymer 1
Commercial Polymer 2
0.00
0.10
0.20
0.30
0.40
Adsorption (mg polymer/gram sand)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0157050 A
- EP 1254144 A